# EUROPEAN PATENT SPECIFICATION

(11) **EP 0 497 534 B1**
(45) Date of publication and mention of the grant of the patent: **31.07.1996**
(21) Application number: 92300676.1
(22) Date of filing: 27.01.1992
(51) Int. Cl.: G01L 9/00

(54) **Piezoresistive pressure transducer with a conductive elastomeric seal**
Piezoresistiver Druckwandler mit leitender, elastomerer Abdichtung
Capteur de pression piézorésistif avec un scellement conductif élastomérique

(30) Priority: 28.01.1991 US 646568
(43) Date of publication of application: 05.08.1992
(73) Proprietor: HONEYWELL INC., Minneapolis Minnesota 55408 (US)
(72) Inventor: Maurer, Dean J., Freeport, Illinois 61032 (US)
(74) Representative: Fox-Male, Nicholas Vincent Humbert

(56) References cited:
- GB-A- 2 189 607
- US-A- 4 426 406
- US-A- 4 500 864
- US-A- 4 505 157
- US-A- 4 609 966
- US-A- 4 656 454
- US-A- 4 691 575
- US-A- 4 770 045
- US-A- 4 823 603

## Description

The invention disclosed herein relates generally to semiconductor pressure sensing apparatus, and more particularly to such apparatus employing a piezoresistive stress sensitive element mounted in a low cost housing employing premolded elastomeric seals, one of which is electrically conductive.

It is well known to package piezoresistive stress sensitive elements so that they are adapted to sense fluid pressure. In order to obtain an output indicative of fluid pressure, such a stress sensitive element must be interfaced with other structure in at least two respects which may have significant effects on the output of the element. Specifically, the element must be mechanically supported, and a fluid tight joint must be provided between the element and the support structure to enable fluid pressures to produce a force differential between different portions (typically opposite sides) of the element.

An example of such a pressure transducer is seen in U.S. Patent 4,656,454 issued to M. Rosenberger on Apr. 7, 1987. The transducer in 4,656,454 shows a three piece housing enclosing a stress sensitive diaphragm and two elastomeric seals. The diaphragm is compressed between the two elastomeric seals and ports on either end of the transducer allow the pressure into the housing to be measured. Piezoresistors on the diaphragm are used in detecting pressure changes. Electrical connections are made to the diaphragm by bonding electrical jumpers onto the conductive regions of the diaphragm. These electrical jumpers are also welded to electrical means which carry current to the outside of the housing. After the electrical connections are made the three pieces of the housing are then ultrasonically welded together.

The present invention provides a pressure transducer assembly comprising a diaphragm of semiconductor material having a central portion with a stress sensitive device formed thereon and electrically conductive regions extending from the stress sensitive device to peripheral portion of said diaphragm; a housing containing said diaphragm and having at least one pressure port which communications with said diaphragm, and said housing having first and second opposing internal surfaces configured to form first and second seats for seals on opposite sides of the diaphragm; electrical leads which extend from the interior to the exterior of the housing are positioned proximate to the first seat; and first and second elastomeric seals located between said diaphragm and the first and second seats respectively, each of said elastomeric seals being molded in a configuration to extend from the seat on a separate one of the internal surfaces of said housing to a surface of said diaphragm at a location surrounding the central portion thereof, said housing being adapted to hold first and second seals and said diaphragm between the first and second seats so as to form a pressure tight seal between said housing and said diaphragm on opposite sides thereof; the assembly is characterised in that said first elastomeric seal is electrically conductive so as to conduct current from the electrically conductive regions on said diaphragm to the electrical leads.

The present invention also provides a method of producing a pressure transducer assembly comprising providing a first housing piece in which a cavity is formed and electrical leads are provided to conduct current from a wall of the cavity to the exterior of said housing piece; positioning a first elastomeric seal in contact with the electrical leads within the cavity of the first housing piece, said first elastomeric seal having opposing sides and being adapted to conduct current between said opposing sides; positioning a stress sensitive semiconductor device within the cavity adjacent to the first elastomeric seal wherein said stress sensitive device having first and second opposing sides, a central diaphragm portion whereupon a stress sensitive element is formed, and electrically conductive regions formed on the first side which extend from the stress sensitive element to a peripheral portion of said device, so that said conductive regions contact one opposing side of the first elastomeric seal; positioning a second elastomeric seal within the cavity adjacent to the stress sensitive device, and second elastomeric seal having opposing sides of which one side contacts the second side of the stress sensitive device; providing a second housing piece which is configured with a surface which will close the cavity and contact the side of the second elastomeric seal opposite said stress sensitive device; and securing the first and second pieces together so that a pressure tight seal is created in the cavity between the first and second elastomeric seals and the stress sensitive device.

The present invention is a low cost piezoresistive pressure transducer utilizing premolded elastomeric seals. The transducer assembly basically comprises a semiconductor diaphragm having a piezoresistive device on a central portion thereof and conductive regions extending from the piezoresistive device to a peripheral portion of the diaphragm, the diaphragm being contained in a housing having at least one pressure port, and a pair of opposing internal surfaces on opposite sides of the diaphragm configured to form seats for seals. Premolded elastomeric seals are located between each seat and the adjacent side of the diaphragm. One elastomeric seal is electrically conductive and it conducts current for the periphery of the diaphragm to electrical leads located at the seat of the seal. These electrical leads conduct the current to the exterior of the housing.

The housing may comprise two pieces which have opposing internal surfaces which act as the seats for the seals and which compress the seals and the diaphragm together upon assembly. The first piece of the housing is configured with an internal cavity which contains and aligns the seals and the diaphragm. The second piece may be configured with a protruding boss which is inserted in the internal cavity of the first piece and will compress the two elastomeric seals and the diaphragm together so as to provide a pressure tight seal. The protruding boss will also allow for proper alignment of the two pieces during assembly and the two pieces of the housing may be configured with an attachment feature which allows them to snap together upon assembly.

The method of the present invention basically comprises fabricating a semiconductor diaphragm having a piezoresistive stress sensitive device formed on its central portion and a peripheral portion to which electrically conductive regional are extended, and forming a two piece housing having at least one pressure port. The two piece housing is configured with the first piece having an internal cavity in which the diaphragm and the two elastomeric seals are positioned and a second piece which will enclose the cavity. According to the method, the premolded elastomeric seals are positioned in the internal cavity on opposite sides of the diaphragm. One elastomeric seal which is electrically conductive is positioned between the diaphragm and the electrical leads so that its conductive area is contacting the conductive regions on the periphery of the diaphragm as well as the electrical leads. The two pieces of the housing are secured together so as to exert pressure on the two seals and create a pressure tight seal across the diaphragm.

The applicant has devised a unique piezoresistive pressure transducer design utilizing a low cost housing a premolded elastomeric seals, which design simplifies the assembly process by eliminating the need to bond electrical connections or ultrasonically weld housing pieces together.

Figure 1 is an exploded view of a piezoresistive pressure transducer in accordance with the applicant's invention.

Figure 2 is a cross sectional view of the transducer of Figure 1.

FIG. 3 is plan and side view of the first elastomeric seal and in particular its conductive areas.

FIG. 4 is a plan view, cross sectional view, and a bottom view of the semiconductor diaphragm showing in particular the conductive regions on the upper surface.

FIG. 5 is a plan view of the first piece 12 of the transducer showing in particular the path of the electrical leads.

FIG. 6 is a fragmentary perspective view of another form of the transducer.

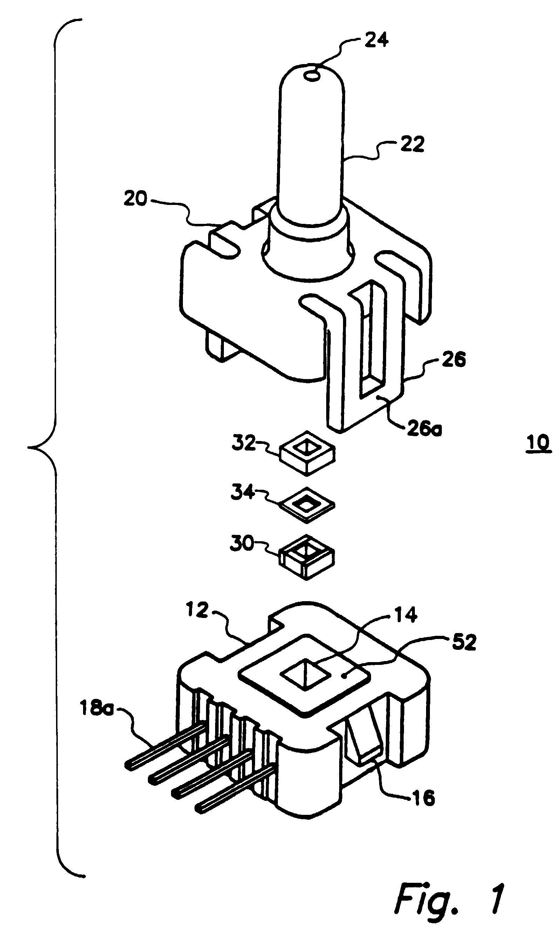

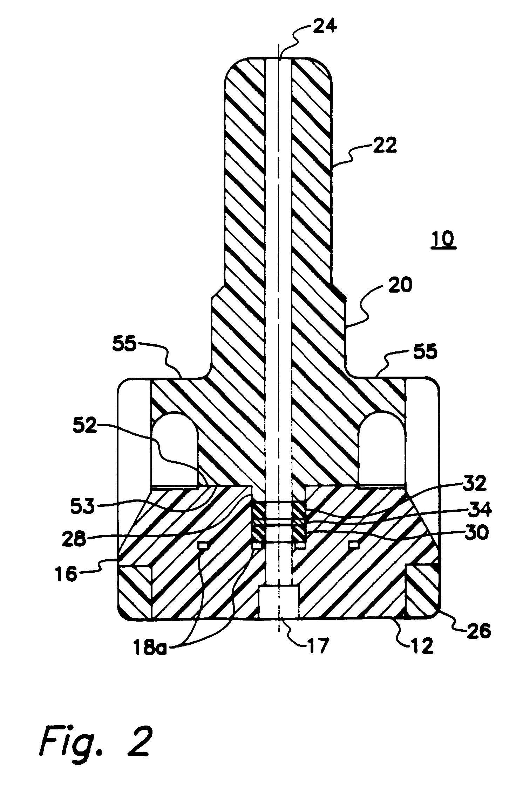

In FIGS. 1 and 2, reference number 10 generally identifies a piezoresistive pressure transducer in accordance with the applicant's invention for sensing gauge pressure of fluid. As shown in FIGS. 1 and 2, transducer 10 includes a housing comprising a first piece 12 and a second piece 20. The first piece 12 is configured with a cavity 14 which extends part way through the piece. A pressure port 17, which is smaller in cross sectional area than the cavity 14, starts at an exterior surface of the first piece 12 and runs into the cavity 14. Electrical leads are also included in the first piece 12. The outer and inner ends of the leads can be identified by the reference numerals 18a and 18b, respectively. The leads pass from the exterior of first piece 12 into the cavity 14. Reference number 16 identifies lugs located on the exterior of the first piece 12. The lugs are used in the process of snapping the first and second pieces together during assembly of the transducer. This snap together function will be described in greater detail hereinafter.

The second piece 20 is configured as a molded body with a pressure port 24 which passes from end to end. A tubing connector 22 is formed to fit snugly into a section of tubing which carries a pressure to be measured. In alternative configurations of the transducer, a tubing connector can be formed on just the first piece and not the second, or on both the first and second pieces. The protruding boss 28 is sized so as to fit into the cavity 14 of the first piece 12. The bails 26 are used in snapping the first and second pieces together. This snap together function will be described in more detail hereinafter.

The surface surrounding the first pressure port 17 in the cavity 14 is configured as a seat for an elastomeric seal. The first elastomeric seal 30 is configured to fit within the cavity 14 and to be positioned upon this seat. The surface surrounding the second pressure port 24 on the protruding boss 28 is also configured as a seat for an elastomeric seal. The second elastomeric seals 32 is configured to fit within the cavity 14 and it is positioned on this seat. Each elastomeric seal is formed with opposing sides which allow it to be compressed between two parts of the transducer 10 and provide a pressure tight seal.

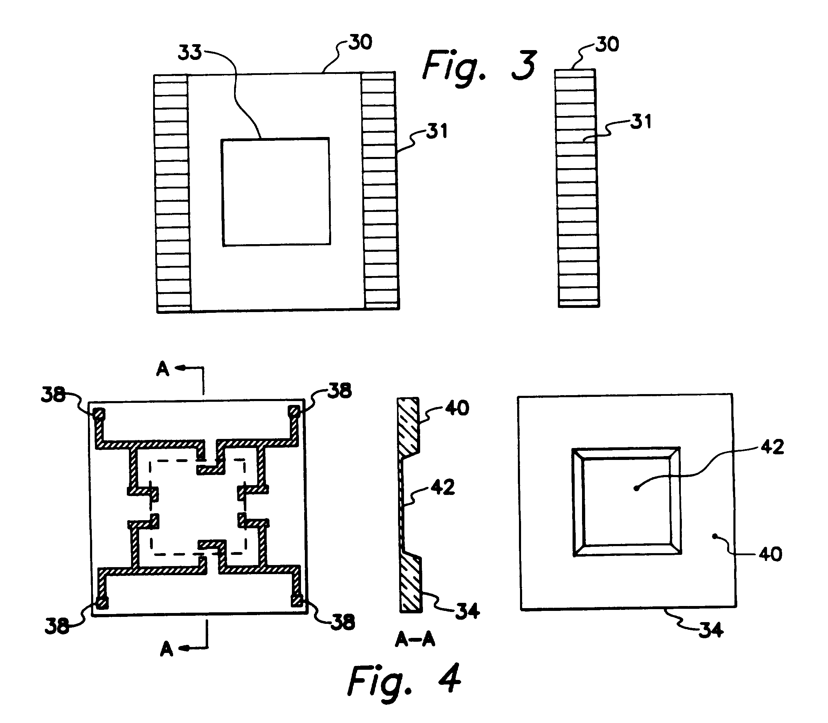

The first elastomeric seal 30 is adapted to conduct current between its opposing sides. As seen in FIG. 3, the area identified by the numeral 31 on the first elastomeric seal 30 is configured so that it conducts current. The conductive area 31 represents repeating layers of silicone rubber and silver impregnated silicone rubber. Because the nonconductive layers of silicone rubber act as an insulator for the silver impregnated silicone rubber stripes, current is only conducted between the opposing sides of the first elastomeric seal 30. The alternating the silicone rubber layers and the silver impregnated layers is known as the Standard Silver Stax, and this material is manufactured by Elastomeric Technology, Inc.

As seen in FIG. 4, Reference numeral 14 identifies a square chip of semiconductor material, such as silicon, having a square area of reduced thickness therein to form a central diaphragm 42. Surrounding this diaphragm is a thickened area identified by the numeral 40. The chip 34 is doped to provide an arrangement of piezoresistors and other conductive regions therein. The piezoresistors form a stress sensitive element which is sensitive to radial and lateral strain. The piezoresistors are configured into a wheatstone bridge configuration. The shaded regions in FIG. 4 represent the doped pattern in the upper surface of chip 34. Communication with the external circuitry is provided by the electrically conductive regions which are brought to the surface at locations indicated by reference numerals 38. The conductive regions 38 contact the conductive area 31 of the first elastomeric seal upon assembly of the transducer 10.

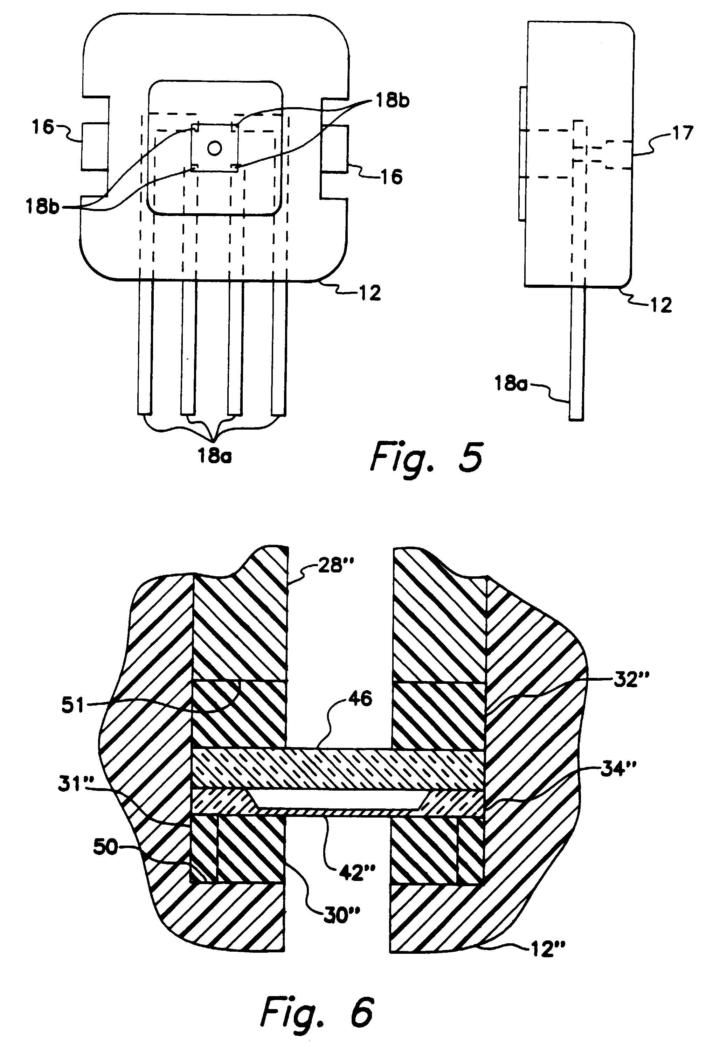

As shown in FIG. 5, the electrical leads 18a, 18b run from outside the first piece 12 into the cavity 14. The first piece is molded around the electrical leads. The leads 18b, terminate at the corners of the cavity 14 on the surface previously identified as the seat for the first elastomeric seal 30. The electrical leads 18a contact the external measuring equipment.

In the assembly process, the first elastomeric seal 30 is placed in the cavity 14 with its conductive regions 38 contacting the electrical leads 18b. The chip 34 is then placed in the cavity so that conductive regions 38 contact the conductive areas 31 of the first elastomeric seal 30. Next, the second elastomeric seal 32 is positioned in the cavity 14 so that one of the opposing sides of the second elastomeric seals contacts the side of the chip 34 opposite from the first seal 30. Finally, the protruding boss 28 of the second piece is inserted in the cavity of the first piece 12 and it contacts the second seal 32. This boss aligns the first piece 12 and the second piece 20 upon assembly. The first and second pieces are then attached together, and the compressive stresses that the boss 28 puts on the two seals and the chip create a pressure tight seal across the diaphragm 42.

Upon assembly of the transducer 10 the first and second pieces will snap together. The bails 26 will slide over the lugs 16 and snap securely into place. This snap together function attaches the first and second pieces and causes the protruding boss 28 to exert sufficient pressure on the two elastomeric seals and the chip to create a pressure tight seal in the cavity 14. This snap together function also allows for easy assembly and disassembly of the transducer 10.

In order to achieve an electrical output signal which accurately represents the pressure supplied to transducer 10, it is important that the prestress applied to chip 34 by seals 30 and 32 remain constant. Further, in order to achieve consistent performance of transducers as manufactured, it is important the same prestress be provided from transducer unit to transducer unit. Housing pieces 12 and 20 include several features described hereinafter which provide for nonvarying and consistent prestress on the transducer chips.

The level of prestress is determined by the distance between seats 50 and 51 in the assembled housing, and the thicknesses of seals 30 and 32 and diaphragm 34. The dimensions of the seals and diaphragm are small and easily held to close tolerances. As designed, the dimensions of cavity 14 and boss 28 are also small and easily held to close tolerances. The distance between seats 50 and 51 is determined by stop surfaces 52 and 51 on housing pieces 12 and 20 respectively. These stop surfaces are also designed to be relatively small to facilitate holding close tolerances. Thus, the principal remaining requirement is that the two housing pieces be held so that stop surfaces 52 and 53 are in firm contact and not movable relative to one another after assembly. This function is provided by the lug and bail arrangement as follows.

Bails 26 are connected to the remainder of housing piece 20 through horizontal portions of the housing piece which have relatively small cross sections, as identified at reference numerals 55. This provides for limited resilience and biases the bight sections 26a of the bails upward against the horizontal laces of lugs 16 alter assembly of the housing pieces. During assembly, housing piece 20 is pressed onto housing piece 12 by exerting downward force on the bails outward from housing cross sections 55. This causes a slight bending of the cross sections as the housing pieces are pressed together and bight sections 26a of the bails snap over lugs 16. When the assembly pressure is released, the resilience of cross sections 55 maintain stop surfaces 52 and 53 on the housing pieces in tight contact.

FIG. 6 illustrates the modifications necessary for use in absolute pressure sensing applications. In FIG. 6 the parts common to the embodiment of FIGS. 1 and 2 are identified by the same reference numerals with the addition of double prime notations. The embodiments of FIG. 6 differs from the embodiment of FIGS. 1 and 2 primarily in that a silicon or glass cover plate 46 is bonded to the side of chip 34˝ opposite diaphragm 42˝ while the space within the rim of the chip is evacuated so as to provide a vacuum reference. The only remaining difference involves minor alterations of parts, dimensions and/or spacing to accommodate the thickness of plate 46.

In accordance with the foregoing description, the applicant has provided a unique, low cost, highly versatile piezoresistive pressure transducer design. Two specific embodiments have been shown and described for illustrative purposes. However, a number of variations and modifications within the applicant's contemplation and teaching will be apparent to those of ordinary skill in the relevant arts. It is not intended that coverage be limited to the discloses embodiment but only by the terms of the following claims.

## Claims

1. A pressure transducer assembly comprising:
a diaphragm (34) of semiconductor material having a central portion with a stress sensitive device formed thereon and electrically conductive regions extending from the stress sensitive device to peripheral portion of said diaphragm;
a housing (12, 20) containing said diaphragm and having at least one pressure port (17, 24) which communicates with said diaphragm, and said housing having first and second opposing internal surfaces configured to form first and second seats for seals on opposite sides of the diaphragm;
electrical leads which extend from the interior to the exterior of the housing being positioned proximate to the first seat; and
first and second elastomeric seals (30, 32) located between said diaphragm and the first and second seats respectively, each of said elastomeric seals being molded in a configuration to extend from the seat on a separate one of the internal surfaces of said housing to a surface of said diaphragm at a location surrounding the central portion thereof, said housing being adapted to hold the first and second seals and said diaphragm between the first and second seats so as to form a pressure tight seal between said housing and said diaphragm on opposite sides thereof; the assembly being characterised in that said first elastomeric seal is electrically conductive so as to conduct current from the electrically conductive regions on said diaphragm to the electrical leads.

2. A transducer assembly according to Claim 1 characterised in that:
the housing comprises first and second pieces (12, 20);
the first piece is formed with a cavity (14);
the second piece is formed with an internal boss which can be inserted into the cavity of the first piece; and
the diaphragm (34) is positioned in the cavity of the first piece between the first and second seal.

3. A transducer assembly according to Claim 1 or 2 characterised in that the first elastomeric seal (30) has first and second opposing sides between which said seal is adapted to conduct electrical current, said first elastomeric seal being located in a cavity of a piece (12) of the housing with the first opposing side in a sealed relationship with said housing surrounding the pressure port, said first opposing side being in electrical contact with the electrical leads.

4. A transducer assembly according to Claim 2 or 3 characterised in that said second piece (20) is configured with a protruding boss (28) configured to be inserted into the cavity of the first piece (12) upon assembly.

5. A transducer assembly according to any of Claims 2 to 4 characterised in that the first and second pieces (12, 20) are adapted to snap together upon assembly.

6. A transducer assembly according to any of Claims 2 to 5 characterised in that the first and second pieces (12, 20) are formed with cooperating bails (26) and lugs (16) which allow the said pieces to snap together.

7. A transducer assembly according to any of Claims 2 to 6 characterised in that the internal boss of the second housing piece (20) is of a predetermined length so as to induce a pressure on the first and second elastomeric seals (30, 32) and the diaphragm (34) to create a pressure tight seal.

8. A transducer assembly according to any of Claims 2 to 7 characterised in that:
said first housing piece (12) is provided with a pressure port (17) therein adapted to be supplied with a pressure to be sensed; and
a first chamber is configured in the cavity of the first housing piece wherein said chamber communicates with the pressure port in said first housing piece and is bounded by the central portion of said diaphragm, said first elastomeric seal, and said first housing piece.

9. A transducer assembly according to any of Claims 2 to 8 characterised in that:
said diaphragm (34) is configured with a peripheral rim which partially surrounds a space, and an open end which extends toward said second housing piece;
a glass plate is fitted over the opening to enclose the space; and
the space within the rim is evacuated, and the rim is sealed with plate so as to provide an absolute pressure sensor.

10. A transducer assembly according to any of Claims 2 to 8 characterised in that:
said second housing piece (20) has a pressure port (24) therein, the pressure port of the second housing piece communicating with a second chamber bounded by the central portion of said diaphragm (34), said second elastomeric seal and said second housing piece, whereby the transducer assembly is adapted to sense a pressure differential between the pressure ports in said first and second housing pieces.

11. A method of producing a pressure transducer assembly comprising:
providing a first housing piece (12) in which a cavity is formed and electrical leads are provided to conduct current from a wall of the cavity to the exterior of said housing piece;
positioning a first elastomeric seal (30) in contact with the electrical leads within the cavity of the first housing piece, said first elastomeric seal having opposing sides and being adapted to conduct current between said opposing sides;
positioning a stress sensitive semiconductor device (34) within the cavity adjacent to the first elastomeric seal wherein said stress sensitive device having first and second opposing sides, a central diaphragm portion whereupon a stress sensitive element is formed, and electrically conductive regions formed on the first side which extend from the stress sensitive element to a peripheral portion of said device, so that said conductive regions contact one opposing side of the first elastomeric seal;
positioning a second elastomeric seal (32) within the cavity adjacent to the stress sensitive device, said second elastomeric seal having opposing sides of which one side contacts the second side of the stress sensitive device;
providing a second housing piece (20) which is configured with a surface which will close the cavity and contact the side of the second elastomeric seal opposite said stress sensitive device; and
securing the first and second pieces together so that a pressure tight seal is created in the cavity between the first and second elastomeric seals and the stress sensitive device.

12. A method according to Claim 11 characterised in that the two pieces of the housing are configured so as to snap together upon assembly.

13. A method according to Claim 11 or 12 characterised in that the two pieces of the housing are configured with cooperating lugs (16) and bails (26) so as to snap together upon assembly.

14. A method according to Claim 11, 12 or 13 characterised in that the second piece is configured with an internal boss;
and
the internal boss of the second piece is configured so as to be inserted into the cavity of the first piece and compress the first and second elastomeric seals against the diaphragm to provide a pressure tight seal.

## Patentansprüche

1. Druckwandlereinrichtung umfassend:
- eine Halbleitermembran (34) mit einem Mittelteil und einer darauf gebildeten spannungsempfindlichen Vorrichtung und mit elektrisch leitenden Regionen, die sich von der spannungsempfindlichen Vorrichtung zum Randteil der Membran erstrecken;
- ein die Membran enthaltendes Gehäuse (12, 20) mit wenigstens einem Druckeinlaß (17, 24), der mit der Membran kommuniziert und wobei das Gehäuse sich gegenüberstehende erste und zweite Innenflächen aufweist, welche zu beiden Seiten der Membran erste und zweite Sitzflächen für Dichtungen bilden;
- elektrische Anschlußleitungen, welche neben der ersten Sitzfläche liegen und sich vom Gehäuseinneren nach außen erstrecken;
- zwischen der Membran und den ersten bzw. zweiten Sitzflächen angeordnete erste und zweite elastomere Dichtungen (30, 32) solcher Gestalt, daß sie sich an einer den Mittelteil der Membran umgebenden Stelle von der Sitzfläche auf einer gesonderten internen Gehäusefläche zu einer Membranfläche erstrecken, wobei das Gehäuse die erste und die zweite Dichtung sowie die Membran zwischen den ersten und zweiten Sitzflächen festhält, um zu beiden Seiten der Membran eine druckfeste Abdichtung zwischen Gehäuse und Membran zu bilden, **dadurch gekennzeichnet,** daß die erste elastomere Dichtung elektrisch leitfähig ist, um von den elektrisch leitenden Regionen auf der Membran Strom an die elektrischen Anschlußleitungen zu übertragen.

2. Wandlereinrichtung nach Anspruch 1, **dadurch gekennzeichnet,** daß
das Gehäuse ein erstes und ein zweites Teil (12, 20) umfaßt;
das erste Teil mit einem Hohlraum (14) ausgestattet ist;
das zweite Teil mit einem internen Vorsprung versehen ist, welcher in den Hohlraum des ersten Teils eingeschoben werden kann; und
die Membran (34) im Hohlraum des ersten Teils zwischen der ersten und der zweiten Dichtung angeordnet ist.

3. Wandlereinrichtung nach Anspruch 1 oder 2, **dadurch gekenn** **zeichnet,** daß die erste elastomere Dichtung (30) sich gegenüberstehende erste und zweite Seiten hat, zwischen denen diese Dichtung stromleitend ist;
die erste elastomere Dichtung in einem Hohlraum eines Gehäuseteils (12) derart angeordnet ist, daß die erste der sich gegenüberliegenden Seiten gegenüber dem den Druckeinlaß umgebenden Gehäuse abgedichtet ist; und
die erste gegenüberliegende Seite in elektrischem Kontakt mit den elektrischen Anschlußleitungen steht.

4. Wandlereinrichtung nach Anspruch 2 oder 3, **dadurch gekennzeichnet,** daß das zweite Teil (20) mit einem vorstehenden Ansatz (28) versehen ist, der beim Zusammenbau in den Hohlraum des ersten Teils (12) eingesetzt wird.

5. Wandlereinrichtung nach einem der Ansprüche 2 bis 4, **dadurch gekennzeichnet,** daß die ersten und zweiten Gehäuseteile (12, 20) beim Zusammenbau mit einer Schnappverbindung aneinander befestigbar sind.

6. Wandlereinrichtung nach einem der Ansprüche 2 bis 5, **dadurch gekennzeichnet,** daß die ersten und zweiten Gehäuseteile (12, 20) mit Querstegen (26) und Nasen (16) versehen sind, welche zusammenwirken und das Zusammenschnappen der Teile ermöglichen.

7. Wandlereinrichtung nach einem der Ansprüche 2 bis 6, **dadurch gekennzeichnet,** daß der interne Vorsprung des zweiten Gehäuseteils (20) eine vorgegebene Länge aufweist, um einen Druck auf die ersten und zweiten elastomeren Dichtungen (30, 32) sowie die Membran (34) auszuüben und eine druckfeste Abdichtung zu bilden.

8. Wandlereinrichtung nach einem der Ansprüche 2 bis 7, **dadurch gekennzeichnet,** daß
das erste Gehäuseteil (12) einen Druckeingang (17) aufweist, dem ein zu messender Druck zugeführt wird; und
eine erste Kammer im Hohlraum des ersten Gehäuseteils gebildet ist, welche mit dem Druckeinlaß im ersten Gehäuseteil kommuniziert und vom Mittelteil der Membran, der ersten elastomeren Dichtung sowie dem ersten Gehäuseteil begrenzt wird.

9. Wandlereinrichtung nach einem der Ansprüche 2 bis 8, **dadurch gekennzeichnet,** daß die Membran (34) eine umlaufende, einen Raum teilweise umschließende Verdickung sowie eine offene Seite aufweist, die sich zum zweiten Gehäuseteil hin erstreckt;
eine Glasplatte über die Öffnung eingepaßt ist, um den Raum abzuschließen; und der Raum innerhalb der Verdickung evakuiert und diese gegenüber der Platte abgedichtet wird, um einen Absolutdruckfühler zu bilden.

10. Wandlereinrichtung nach einem der Ansprüche 2 bis 8, **dadurch gekennzeichnet,** daß
das zweite Gehäuseteil (20) einen Druckeinlaß (24) aufweist, welcher mit einer zweiten Kammer kommuniziert, die durch den Mittelteil der Membran (34), die zweite elastomere Dichtung sowie das zweite Gehäuseteil begrenzt wird, und wobei die Wandlereinrichtung eine Druckdifferenz zwischen den Druckeinlässen im ersten und zweiten Gehäuseteil mißt.

11. Verfahren zum Herstellen einer Druckwandlereinrichtung mit:
Bereitstellen eines ersten Gehäuseteils (12) mit einem darin gebildeten Hohlraum sowie elektrischen Anschlußleitungen, um Strom von einer Wand des Hohlraums zur Außenseite des Gehäuseteils zu leiten;
Einlegen einer ersten elastomeren Dichtung (30) in Berührung mit den elektrischen Anschlußleitungen in den Hohlraum des ersten Gehäuseteils, wobei die elastomere Dichtung gegenüberliegende Seiten aufweist, zwischen denen Strom fließen kann;
Einsetzen einer spannungsempfindlichen Halbleitereinrichtung (34) in den Hohlraum benachbart zur ersten elastomeren Dichtung, wobei die spannungsempfindliche Einrichtung sich gegenüberstehende erste und zweite Seiten, einen mittleren Membranteil mit einem darauf gebildeten spannungsempfindlichen Element sowie auf ihrer ersten Seite gebildete elektrisch leitende Regionen aufweist, die sich vom spannungsempfindlichen Element zu einem Umfangsteil der Einrichtung erstrecken, so daß diese leitfähigen Regionen mit einer der sich gegenüberstehenden Seiten der ersten elastomeren Dichtung in Kontakt stehen;
Einlegen einer zweiten elastomeren Dichtung (32) in den Hohlraum benachbart zur spannungsempfindlichen Einrichtung, wobei die zweite elastomere Dichtung sich gegenüberstehende Seiten hat, von denen eine mit der zweiten Seite der spannungsempfindlichen Einrichtung in Kontakt steht;
Bereitstellen eines zweiten Gehäuseteils (20) mit einer Oberfläche, welche den Hohlraum schließt und mit derjenigen Seiten der zweiten elastomeren Dichtung in Kontakt steht, welche der spannungsempfindlichen Einrichtung abgewandt ist; und Verbinden der ersten und zweiten Gehäuseteile miteinander, so daß eine druckfeste Dichtung im Hohlraum zwischen den ersten und zweiten elastomeren Dichtungen und der spannungsempfindlichen Einrichtung entsteht.

12. Verfahren nach Anspruch 11, **dadurch gekennzeichnet,** daß die beiden Gehäuseteile so gestaltet sind, daß sie beim Zusammenbau zusammenschnappen.

13. Verfahren nach Anspruch 11 oder 12, **dadurch gekennzeichnet,** daß die beiden Gehäuseteile mit Nasen (16) und Querstegen (26) versehen sind, die beim Zusammenbau zusammenschnappen.

14. Verfahren nach Anspruch 11, 12 oder 13, **dadurch gekennzeichnet,** daß das zweite Gehäuseteil einen internen Vorsprung aufweist; und
dieser interne Vorsprung des zweiten Teils in den Hohlraum des ersten Teils einsetzbar ist und die ersten und zweiten elastomeren Dichtungen gegen die Membran drückt, um eine druckfeste Abdichtung zu erzielen.

## Revendications

1. Ensemble de transducteur de pression comprenant :
un diaphragme (34) réalisé en un matériau semi-conducteur et possédant une partie centrale comportant un dispositif sensible à une contrainte et formé sur ce diaphragme, et des régions électriquement conductrices s'étendant à partir du dispositif sensible à une contrainte jusqu'à une partie périphérique dudit diaphragme;
un boîtier (12,20) contenant ledit diaphragme et possédant au moins un orifice d'entrée de pression (17,24) qui communique avec ledit diaphragme, ledit boîtier possédant des première et seconde surfaces internes opposées agencées de manière à former des premier et second sièges pour des joints d'étanchéité, sur des faces opposées du diaphragme;
des conducteurs électriques qui s'étendent de l'intérieur à l'extérieur du boîtier et sont positionnés à proximité du premier siège; et
des premier et second joints d'étanchéité élastomères (30,32) disposés respectivement entre ledit diaphragme et les premier et second sièges, chacun desdits joints d'étanchéité élastomères étant moulé avec une configuration telle qu'il s'étend depuis le siège de l'une, séparée, des surfaces intérieures dudit boîtier jusqu'à une surface dudit diaphragme en un emplacement entourant la partie centrale de ce dernier, ledit boîtier étant adapté pour maintenir les premier et second joints d'étanchéité et ledit diaphragme entre les premier et second sièges afin d'établir une étanchéité à la pression entre ledit boîtier et ledit diaphragme sur les faces opposées de ce dernier, l'ensemble étant caractérisé en ce que ledit premier joint d'étanchéité élastomère est électriquement conducteur de manière à véhiculer le courant depuis les régions électriquement conductrices situées sur ledit diaphragme jusqu'aux conducteurs électriques.

2. Ensemble de transducteur selon la revendication 1, caractérisé en ce que :
le boîtier comprend des première et seconde parties (12,20);
la première partie est pourvue d'une cavité (14);
la seconde partie comporte un bossage intérieur qui peut être inséré dans la cavité de la première partie; et
le diaphragme (34) est disposé dans la cavité de la première partie entre les premier et second joints d'étanchéité.

3. Ensemble de transducteur selon la revendication 1 ou 2, caractérisé en ce que le premier joint d'étanchéité élastomère (30) possède des première et seconde faces opposées, entre lesquelles ledit joint d'étanchéité est adapté pour conduire un courant électrique, ledit premier joint d'étanchéité élastomère étant situé dans une cavité d'une partie (12) du boîtier, sa première face opposée s'appliquant de façon étanche contre ledit boîtier entourant l'orifice d'entrée de pression, et ladite première face opposée étant électriquement en contact avec les conducteurs électriques.

4. Ensemble de transducteur selon la revendication 2 ou 3, caractérisé en ce que ladite seconde partie (20) comporte un bossage saillant (28) conformé de manière à être inséré dans la cavité de la première partie (12), lors de l'assemblage.

5. Ensemble de transducteur selon l'une quelconque des revendications 2 à 4, caractérisé en ce que les première et seconde parties (12,20) sont adaptées de manière à s'encliqueter l'une dans l'autre lors de l'assemblage.

6. Ensemble de transducteur selon l'une quelconque des revendications 2 à 5, caractérisé en ce que les première et seconde parties (12,20) comportent des anses (26) et des pattes (16) qui coopèrent entre elles en permettant auxdites parties de s'encliqueter l'une dans l'autre.

7. Ensemble de transducteur selon l'une quelconque des revendications 2 à 6, caractérisé en ce que le bossage intérieur de la seconde partie (20) du boîtier possède une longueur prédéterminée permettant d'appliquer une pression aux premier et second joints d'étanchéité élastomères (30,32) et au diaphragme (34) pour établir une étanchéité à la pression.

8. Ensemble de transducteur selon l'une quelconque des revendications 2 à 7, caractérisé en ce que :
ladite première partie (12) du boîtier comporte un orifice d'entrée de pression (17) apte à être alimenté par une pression à détecter; et
une première chambre est formée dans la cavité de la première partie de boîtier, ladite chambre communiquant avec l'orifice d'entrée de pression dans ladite première partie du boîtier et étant délimitée par la partie centrale dudit diaphragme, par ledit premier joint d'étanchéité élastomère et par ladite première partie du boîtier.

9. Ensemble de transducteur selon l'une quelconque des revendications 2 à 8, caractérisé en ce que :
ledit diaphragme (34) est agencé avec un rebord périphérique, qui entoure partiellement un espace, et une extrémité ouverte qui s'étend en direction de ladite seconde partie du boîtier;
une plaque de verre est ajustée sur l'ouverture de manière à fermer cet espace; et
un vide est établi dans l'espace à l'intérieur du rebord et le rebord s'applique de façon étanche contre la plaque pour former un capteur de pression absolue.

10. Ensemble de transducteur selon l'une quelconque des revendications 2 à 8, caractérisé en ce que :
ladite seconde partie (20) du boîtier contient un orifice d'entrée de pression (24), l'orifice d'entrée de pression de la seconde partie du boîtier communiquant avec une seconde chambre délimitée par la partie centrale dudit diaphragme (34), par ledit second joint d'étanchéité élastomère et par ladite seconde partie du boîtier, ce qui a pour effet que l'ensemble de transducteur est adapté pour détecter une pression différentielle entre les orifices d'entrée de pression situés dans lesdites première et seconde parties du boîtier.

11. Procédé pour fabriquer un ensemble de transducteur de pression consistant à :
prendre une première partie de boîtier (12), dans laquelle une cavité est formée et des conducteurs électriques sont prévus de manière à conduire le courant depuis une paroi de la cavité jusqu'à l'extérieur de ladite partie du boîtier;
placer un premier joint d'étanchéité élastomère (30) en contact avec les conducteurs électriques à l'intérieur de la cavité de la première partie du boîtier, ledit premier joint d'étanchéité élastomère possédant des faces opposées et étant apte à conduire un courant entre lesdites faces opposées;
positionner un dispositif à semi-conducteurs (34) sensible à une contrainte, à l'intérieur de la cavité en position adjacente au premier joint d'étanchéité élastomère, ledit dispositif sensible à une contrainte possédant des première et seconde faces opposées, une partie centrale de diaphragme, sur laquelle est formé un élément sensible à une contrainte, et des régions électriquement conductrices formées sur la première face et qui s'étendent depuis l'élément sensible à une contrainte jusqu'à une partie périphérique dudit dispositif, de sorte que lesdites régions conductrices sont en contact avec une face opposée du premier joint d'étanchéité élastomère;
positionner un second joint d'étanchéité élastomère (32) dans la cavité au voisinage du dispositif sensible à une contrainte, ledit second joint d'étanchéité élastomère possédant des faces opposées, dont l'une est en contact avec la seconde face du dispositif sensible à une contrainte;
prévoir une seconde partie de boîtier (20), qui comporte une surface qui ferme la cavité et vient en contact avec la face du second joint d'étanchéité élastomère située à l'opposé dudit dispositif sensible à une contrainte; et
fixer les première et seconde parties l'une à l'autre de manière à établir une étanchéité à la pression dans la cavité entre les premier et second joints d'étanchéité élastomères et le dispositif sensible à une contrainte.

12. Procédé selon la revendication 11, caractérisé en ce que les deux parties du boîtier sont agencées de manière à s'encliqueter l'une avec l'autre lors de l'assemblage.

13. Procédé selon la revendication 11 ou 12, caractérisé en ce que les deux parties du boîtier sont formées avec des pattes (16) et des anses (26), qui coopèrent entre elles, de manière à s'encliqueter l'une dans l'autre lors de l'assemblage.

14. Procédé selon la revendication 11, 12 ou 13, caractérisé en ce que la seconde partie est agencée avec un bossage intérieur; et
le bossage intérieur de la seconde partie est conformé de manière à être inséré dans la cavité de la première partie et à comprimer les premier et second joints d'étanchéité élastomères contre le diaphragme de manière à établir une étanchéité à la pression.
